# EUROPEAN PATENT APPLICATION

(11) **EP 4 435 768 A1**
(43) Date of publication of application: **25.09.2024**
(21) Application number: 23214640.7
(22) Date of filing: 06.12.2023
(51) Int. Cl.: G09G 3/00

(54) **DISPLAY DRIVE DEVICE AND IMAGE DATA INSPECTION METHOD**

(30) Priority: 20.03.2023 KR 20230035913
(71) Applicant: LX Semicon Co., Ltd., Daejeon 34027 (KR)
(72) Inventor: YOON, Kwang Hee, 34027 Daejeon (KR); KWAK, Bong Sin, 34027 Daejeon (KR); KIM, Man Jung, 34027 Daejeon (KR); KIM, Myung Yu, 34027 Daejeon (KR); JEONG, Seok Jin, 34027 Daejeon (KR)
(74) Representative: Goddar, Heinz J.

(57) **Abstract**

This embodiment relates to a display processing device, a display driving device, a data transmission method, and an image data inspection method, and provides a device and a method for inspecting image data transmitted through a transmission line for error.

## Description

### TECHNICAL FIELD

This embodiment relates to a display driving device and a method for inspecting image data.

### BACKGROUND

A display panel may include multiple pixels arranged in a matrix form and each pixel may constitute sub-pixels such as red (R), green (G), and blue (B). Each sub-pixel may display an image on the display panel while emitting light with a grayscale corresponding to video data (or image data).

Image data may be transmitted from a host (e.g., a graphics processor unit (GPU)) to a timing controller. In addition, the image data may be transmitted from the timing controller to a source driver. In this case, a device for transmitting the image data may be referred to as a display processing device for convenience, and a device for receiving the image data may be referred to as a display driving device for convenience. For example, the image data may be transmitted in a form of digital values and the source driver may convert the transmitted image data in the form of digital values into analog voltages to drive each sub-pixel.

Meanwhile, as display devices are getting larger in size and higher in resolution, a demand for a high-performance interface for transmitting signals between a video source (e.g., a host) and a display device is arising. To meet this demand, Vx1 is applying for a television (TV), and a display port (hereinafter referred to as "DP") is applying for IT products such as a laptop computer. A DP interface, as an interface regulated by Video Electronics Standards Association (VESA), is an interface scheme that may integrate low voltage differential signaling (LVDS) of existing internal interface standard and a digital visual interface (DVI) of external connection standard into one. The DP interface is a technology that may digitally make not only an internal connection between chips but also an external connection between products. As the two divided interfaces are integrated into one, it is possible to support higher color depth and resolution by widening a data bandwidth. For example, the DP interface may have a bandwidth of up to 10.8 Gbps which is twice or more that of the existing DVI (maximum 4.95 Gbps) and simultaneously transmit up to six streams of 1080i (three streams of 1080p) through one connector connection by supporting multi-streams using Micro-Packet architecture. VESA has announced a new version of the embedded Display Port (hereinafter referred to as "eDP") standard. The eDP standard is an interface standard corresponding to the DP interface designed for embedded display applications such as laptop computers, tablets, netbooks, and all-in-one desktop PCs.

Meanwhile, a vehicle display applied to a vehicle may display a map, a gear state, a turn signal lamp state, a vehicle state, and the like. In addition, the vehicle display may also display values acquired by various sensors in the vehicle. For example, the vehicle display may display front/rear/side vehicle position, pedestrian position, obstacle position, and the like. As described above, some of the information displayed on the vehicle display may include information that has a fatal impact on vehicle safety. Therefore, a vehicle accident may occur when a driver recognizes a condition of a vehicle or its surroundings according to incorrect information displayed on the vehicle display.

Therefore, there is a need for a method capable of inspecting error of information displayed on the vehicle display. In addition, there is a need for a method that can check error in images whose position is dynamically changed among the information displayed on a vehicle display.

### SUMMARY

### Technical Problem

With this background, an object of the present embodiment is to provide a display processing device, a display driving device, a data transmission method, and image data inspection that can check error in data in important area among information displayed on a display (e.g., a vehicle display).

In addition, one object of this embodiment is to provide a display processing device, a display driving device, a data transmission method, and an image data inspection method that can check error in data in important area without adding a separate interface for transmitting CRC data.

In addition, one object of the present embodiment is to provide a display processing device, a display driving device, a data transmission method, and a data inspection method for checking error in image whose position is dynamically changed among information displayed on a display (e.g., a vehicle display).

### Technical Solution

To this end, the embodiment provides a method for inspecting image data of a display driving device, comprising: receiving data of a first frame transmitted from a display processing device; checking a first partial area among the areas of image data included in the first frame, based on location information included in the data of the first frame;
generating a first cyclic redundancy check (CRC) data for the first partial area; and checking CRC data included in the data of the received first frame; and determining whether there is an error in the first partial area based on a comparison result between the CRC data included in the data of the first frame and the generated first CRC data.

Another embodiment provides a display driving device, comprising: a frame data receiving unit configured to receive data of a first frame transmitted from a display processing device; a cyclic redundancy check (CRC) generation unit configured to check a first partial area among the areas of image data included in the first frame based on location information included in the data of the first frame and generate a first CRC data on the first partial area, a CRC extracting unit configured to check CRC data included in the data of the first frame; and a CRC check unit configured to determine whether there is an error in the first partial area based on a result of comparing the CRC data checked by the CRC extraction unit with the first CRC data generated by the CRC generation unit.

### Advantageous Effects

As described above, according to an embodiment of the present disclosure, it is possible to inspect an error in data in an important area of information displayed on a display (e.g., a vehicle display).

In addition, according to an embodiment of the present disclosure, it is possible to inspect an error in data in an important area of information displayed on a display (e.g., a vehicle display) without adding a separate interface for transmitting CRC data.

Additionally, according to this embodiment, error in image whose position is dynamically changed among information displayed on a display (e.g., a vehicle display) can be checked. For example, the visual effect can be increased by displaying notification expressed in a car's cluster as a dynamic image rather than a fixed image, and user convenience can be improved through more intuitive notification.

### BRIEF DESCRIPTION OF THE DRAWINGS

FIG. 1 is a block diagram of a display device according to an embodiment.
FIG. 2 is a block diagram of a data communication system according to an embodiment.
FIG. 3 is a block diagram of a data communication system according to an embodiment.
FIG. 4 is a block diagram of a display device according to an embodiment.
FIG. 5 is a diagram illustrating a structure of frame data according to an embodiment.
FIG. 6 is a diagram illustrating a structure of frame data according to an embodiment.
FIG 7 is a diagram illustrating the structure of frame data according to one embodiment.
FIG 8 is a diagram illustrating the configuration of transmission data according to an embodiment.
FIG. 9 is a circuit diagram of a data transmission device according to an embodiment.
FIG 10 is a circuit diagram of a data reception device according to an embodiment.
FIG 11 is a flowchart of a data transmission method according to one embodiment.
FIG 12 is a circuit diagram of an image data inspection method according to an embodiment.

### DETAILED DESCRIPTION OF THE EMBODIMENTS

Hereinafter, embodiments of the present disclosure will be described in detail with reference to the accompanying drawings. In adding reference numerals to elements in each drawing, the same elements will be designated by the same reference numerals as far as possible, although they are shown in different drawings. In addition, in the following description of the present disclosure, a detailed description of known functions and configurations incorporated herein will be omitted when it is determined that the description may make the subject matter of the present disclosure rather unclear.

In addition, terms, such as first, second, A, B, (a), (b) or the like may be used herein when describing elements of the present disclosure. These terms are merely used to distinguish one element from other elements, and a property, an order, a sequence or the like of a corresponding element are not limited by the terms. When it is described in the specification that an element is "connected," "coupled" or "joined" to another element, it should be understood that the element may be directly connected, coupled or joined to the other elements, but another element may be "connected," "coupled," and "joined" between the element and other elements.

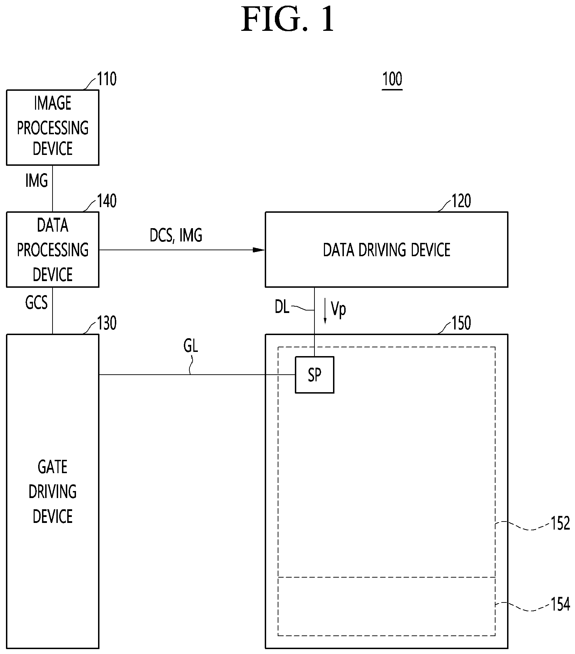

FIG. 1 is a block diagram of a display device according to an embodiment.

Referring to FIG. 1, a display device 100 may include a plurality of panel driving devices (or panel driving circuits) 110, 120, 130, and 140 and a display panel 150.

Multiple data lines DL, multiple gate lines GL, and multiple pixels may be disposed on the display panel 150. A pixel P may consist of a plurality of sub-pixels SP. Here, the sub-pixels may be R (red), G (green), B (blue), and W (white). A pixel may consist of RGB sub-pixels SP, RGBG sub-pixels SP, or RGBW sub-pixels SP. For convenience of description, the present disclosure will be described hereinafter on supposition that a pixel consists of RGB sub-pixels SP.

The panel driving devices (or panel driving circuits) 110, 120, 130, and 140 are devices configured to generate signals for displaying images on the display panel 150. which may include at least on of an image processing device (or image processing circuit) 110, a data driving device (or data driving circuit) 120, a gate driving device (or gate driving circuit) 130, and a data processing device (or data processing circuit) 140.

The gate driving device (or gate driving circuit) 130 may supply gate driving signals of turn-on voltage or turn-off voltage to gate lines GL. When a gate driving signal of turn-on voltage is supplied to a sub-pixel SP, the sub-pixel SP may be connected to a data line DL. When a gate driving signal of turn-off voltage is supplied to the sub-pixel SP, the sub-pixel SP may be disconnected from the data line DL. The gate driving device 130 may be referred to as a gate driver.

The data driving device (or data driving circuit) 120 may supply data voltage Vp to a sub-pixel SP through a data line DL. The data voltage Vp supplied through the data line DL may be supplied to the sub-pixel SP according to the gate driving signal. The data driving device 120 may be referred to as a source driver.

The data driving device 120 may include at least one integrated circuit and this at least one integrated circuit may be connected to a bonding pad of the display panel 150 in a tape automated bonding (TAB) type or a chip-on-glass (COG) type, directly formed on the display panel 150, or integrated on the display panel 150 according to embodiments. In addition, the data driving device 120 may be formed in a chip-on-film (COF) type.

When the data driving device 120 is formed in the chip-on-glass type, integrated circuits constituting the data driving device 120 may be formed on a periphery 154 of an active area 152 where sub-pixels SP are disposed. To maximize the active area 152 of the panel 150, an area of the periphery 154 may be narrowed and chip sizes of the integrated circuits constituting the data driving device 120 may be reduced.

The data processing device (or data processing circuit) 140 may supply control signals to the gate driving device 130 and the data driving device 120. For example, the data processing device 140 may transmit gate control signals GCS which makes a scan started to the gate driving device 130. In addition, the data processing device 140 may output image data IMG to the data driving device 120. Further, the data processing device 140 may transmit data control signals DCS for controlling the data driving device 120 to supply data voltage Vp to each sub-pixel. The data processing device 140 may be referred to as a timing controller.

The image processing device 110 may generate image data IMG and transmit the same to the data processing device 140. The image processing device 110 may be referred to as a host. For example, the image processing device 110 may include a graphic processing unit (GPU).

The data processing device 140 may include at least one data processing circuit implemented in a form of an integrated circuit and the data driving device 120 may include at least one data driving circuit implemented in a form of an integrated circuit. A high-speed communication interface is formed between the data processing circuit and the data driving circuit and the data processing circuit may transmit data control signals DCS and/or image data IMG to the data driving circuit through such a high-speed communication interface.

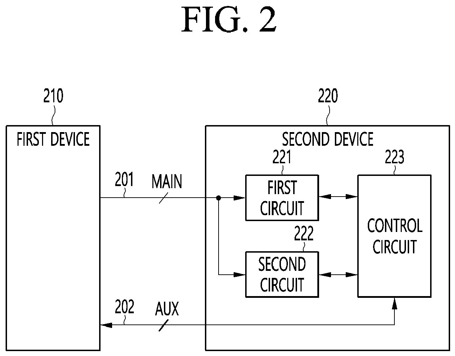

FIG. 2 is a block diagram of a data communication system according to an embodiment.

Referring to FIG. 2, the data communication system may include a first device 210 and a second device 220. The first device 210 may transmit data (e.g., image data) to the second device 220 through a main line MAIN 201. The first device 210 may be referred to as a data transmitting device, and the second device 220 may be referred to as a data receiving device. The second device 220 may include a first circuit 221, a second circuit 222, and a control circuit 223.

Referring to FIG. 1 described above, according to an embodiment, since image data is transmitted from the image processing device 110 to the data processing device 140, when the image processing device 110 corresponds to the first device 210, the data processing device 140 may correspond to the second device 220. In addition, since image data is transmitted from the data processing device 140 to the data driving device 120, when the data processing device 140 corresponds to the first device 210, the data driving device 120 may correspond to the second device 220.

According to an embodiment, the first device 210 and the second device 220 may be connected to a plurality of main lines MAIN 201 and at least one auxiliary line AUX 202. In addition, although not shown in FIG. 2, the first device 210 and the second device 220 may be connected to at least one clock line CL. According to an embodiment, when data including a clock signal is transmitted through the main line MAIN 201, the clock line CL may be omitted. For example, when the main line MAIN 201 consists of a differential signal and data including a clock signal is transmitted through the main line MAIN 201, a signal including the clock signal may be referred to as a clock embedded differential signal (CEDS), but embodiments to be described later are not limited to the term.

According to an embodiment, an auxiliary signal (or control signal) may be transmitted through the auxiliary line AUX 202. When the auxiliary signal (or control signal) is transmitted through the main line MAIN 201 without a separate auxiliary line AUX, it may be referred to as AUX-less communication, but embodiments to be described later are limited to the term. According to an embodiment, the auxiliary signal (or control signal) may be, for example, a signal indicating a state of the second device 220 (or the first circuit 221). When the auxiliary signal has a first level of voltage, it may indicate that the second device 220 is in a state in which it is possible to receive data. When the auxiliary signal has a second level of voltage, it may indicate that the second device 220 is in a state in which it is difficult to receive data. Here, the first level and the second level may be different voltage levels. The auxiliary signal may be referred to as a lock signal. In the phase locked loop (PLL) method, a data receiving side may include a step of adjusting a clock phase in accordance with a communication signal and when the clock phase is adjusted, a lock signal may be changed. For example, the lock signal may be changed from a low level to a high level or from a high level to a low level.

According to an embodiment, a lock signal may be transmitted through the auxiliary line AUX 202. Here, the lock signal may indicate a state of adjustment of clock phase as well as other states of the second device 220. For example, the level change of the lock signal from high to low may indicate that the second device 220 is in a state in which the data reception is difficult or that a communication signal transmitted to the second device 220 is abnormal.

According to an embodiment, a clock pattern may be transmitted through the clock line CL or the main line MAIN 201. The clock pattern, for example, may indicate a byte unit of data transmitted through the main line MAIN (e.g., ML1, ML, ..., MLn). The second device 220 may recognize received data by the byte unit according to the clock pattern. For example, the second device 220 may receive the clock pattern through the main line MAIN 201 and train a communication clock according to the clock pattern. In addition, the second device 220 may receive data transmitted through the main line MAIN 201 according to the communication clock.

According to an embodiment, as described above, the clock line CL may not be used. In this case, a clock pattern may be embedded in data transmitted through the main line MAIN 201. Such a clock pattern may be referred to as an embedded clock. According to an embodiment, a communication signal of low voltage and high frequency may be transmitted through the main line MAIN 201 (or main transmission line). The main line MAIN 201 may have two lines in pair (e.g., a positive line and a negative line), and the two lines in pair may transmit a communication signal in a differential signal transmission method.

According to an embodiment, data (e.g., image data) may be transmitted through the main line MAIN 201. In addition, the data may include information or patterns. For example, configuration data, image data, and the like transmitted through the main line MAIN 201 may include information. The configuration data may include information on all set values necessary for the operation of the second device 220 and the image data may include information on a grayscale value of each pixel. The configuration data may include the data control signal (see DCS of FIG. 1) described with reference to FIG. 1 and the image data may be the image data (see IMG of FIG. 1) described with reference to FIG. 1.

According to an embodiment, training data (or link data) transmitted through the main line MAIN 201 may include a set pattern. Here, the pattern may indicate a temporal rule of the signal. The first device 210 and the second device 220 may exchange data in a non-synchronized state due to a delay or others on the main line MAIN. To transmit/receive data in such a non-synchronized state, the second device 220 may train a data link using training data and receive configuration data or image data according to the trained data link. The training data (or link data) is mainly transmitted and received for training of the data link, however, in an embodiment, the training data may be transmitted and received so as to indicate a piece of information.

According to an embodiment, the first circuit 221 of the second device 220 may receive and process data transmitted through the main line MAIN 201 (e.g., a differential signal line) from the first device 210. The second circuit 222 of the second device 220 may receive and process a control signal transmitted through the main line MAIN 201 (e.g., a differential signal line) from the first device 210. The control signal processed by the second circuit 222 of the second device 220 may include a signal for controlling the first circuit 221. For example, the control signal processed by the second circuit 222 of the second device 220 may include a signal for controlling power supplied to the first circuit 221 (e.g., a signal for cutting off or reducing power).

According to an embodiment, the control circuit 223 may control power supplied to the first circuit 221 (e.g., cut off or reduce power) on the basis of the control signal processed through the second circuit 222. According to an embodiment, when data (e.g., image data) transmitted from the first device 210 is received by the second device 220, there may be a temporary stream inactive period in which data is not transmitted. The control circuit 223 may cut off or reduce power supplied to the first circuit 221 to reduce power consumption during the period in which the data is not transmitted. For example, power supplied to the first circuit 221 may be cut off or reduced to reduce power consumption during the period in which the data is not transmitted. For example, a mode for cutting off or reducing power supplied to the first circuit 221 may be referred to as a low power mode, but various embodiments are not limited to the term. The first device 210 may transmit a control signal through the main line MAIN 201 to control a mode of the first circuit 221 included in the second device 220. The control signal transmitted through the main line MAIN 201 may be processed by the second circuit 222 of the second device 220. A signal for switching a mode again to receive data of the first circuit 221 in a state in which the first circuit 221 has limited power supply may be referred to as a wake-up signal, but various embodiments are not limited to the term. A signal for switching to a low power mode upon entering the temporary stream inactive period in a state in which power is normally supplied to the first circuit 221 may be referred to as a sleep signal, but various embodiments are not limited to the term. In addition, a function of managing power by controlling a mode of the second device 220 receiving data as described above may be referred to as advanced link power management (ALPM), but various embodiments are not limited to the term.

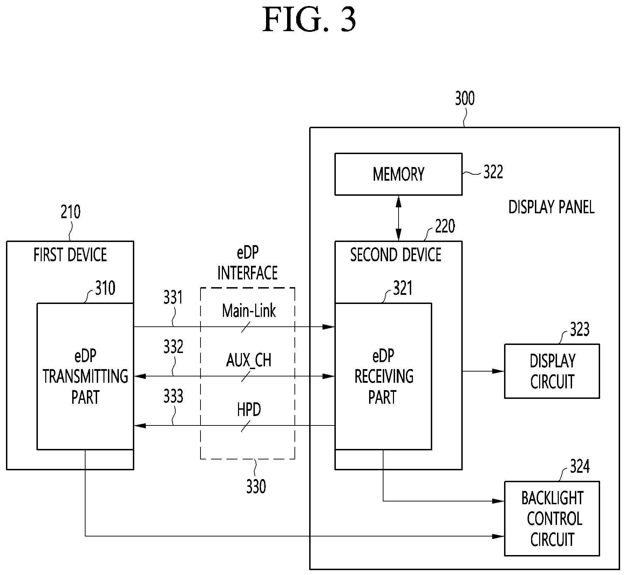

According to an embodiment, the first device 210 and the second device 220 may communicate with each other through a DP interface, an eDP interface, or a high-definition multimedia interface (HDMI). Hereinafter, with reference to FIG. 3, an embodiment in which communication is performed between the first device 210 and the second device 220 through the eDP interface will be described, but the following embodiments are not limited thereto.

FIG. 3 is a block diagram of a data communication system according to an embodiment.

Referring to FIG. 3, the data communication system according to an embodiment may include a first device 210 and a second device 220. The first device 210 may include an eDP transmitting part 310 to communicate with the second device 220 through an eDP interface 330. The second device 220 may include an eDP receiving part 321 to communicate with the first device 210 through the eDP interface 330. In this case, the first device 210 may be referred to as a source device and the second device 220 may be referred to as a sink device. In addition, the eDP transmitting part 310 may be referred to as a source device functional part and the eDP receiving part 321 may be referred to as a sink device functional part. According to an embodiment, the second device 220 may be included in a display panel 300. For example, the display panel 300 may include a second device 220, a memory 322, a display circuit 323, and a backlight control circuit 324. The eDP transmitting part 310 included in the first device 210 may be integrated into the GPU as described above. The eDP receiving part 321 included in the second device 220 may be integrated into the data processing device 140 (e.g., timing controller).

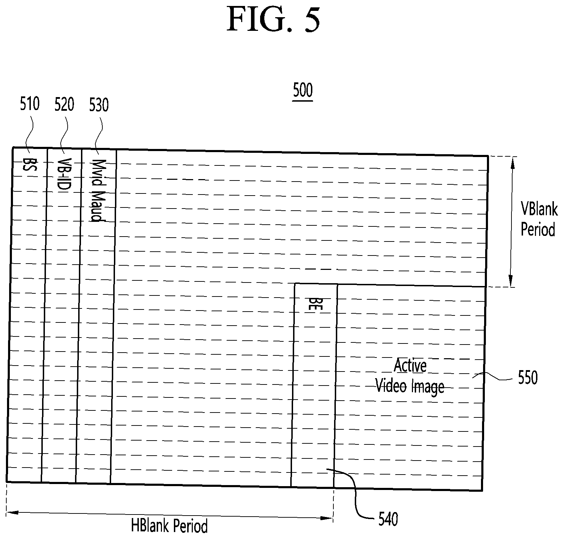

According to an embodiment, the eDP interface 330 may include a main link (Main-Link) 331, an auxiliary line (AUX_CH) 332, and a hot plug detect (HPD) line 333. The HPD line 333 may be a signal line for detecting an eDP interface connection between the first device 210 and the second device 220. For example, when the first device 210 and the second device 220 are connected through the HPD line 333, the first device 210 may detect a connection to the second device 220 through the eDP interface 330 and prepare communication with the second device 220 through an eDP protocol. The auxiliary line 332 may transmit and receive all set information for eDP communication between the first device 210 and the second device 220. In addition, the first device 310 may determine whether the second device 220 is in a communicable state on the basis of a signal detected through the auxiliary line 332. In addition, the eDP transmitting part 310 of the first device 210 may transmit mode switching information through the auxiliary line 332 so that the main link 331 operates in a low power mode. According to an embodiment, the first device 210 may transmit image data through the main link 331 and transmit data defined in a form of a frame as shown in FIG. 5 described later.

According to an embodiment, a display ID or an extended display ID (EDID) for setting a specific panel may be stored in the memory 322 included in the display panel 300. The first device 210 may use the auxiliary line 332 of the eDP interface 330 to check the display ID or EDID stored in the memory 322. The eDP transmitting part 310 or the eDP receiving part 321 may transmit a backlight control signal to the backlight control circuit 324. The backlight control circuit 324 may control dimming of the backlight on the basis of the backlight control signal received through the eDP transmitting part 310 or the eDP receiving part 321.

According to an embodiment, the second device 220 may receive image data for display from the first device 210 through the main link 331 of the eDP interface 330. The image data received from the second device 220 may be transmitted to the display circuit 323. The display circuit 323 may convert digital image data received from the second device 220 into an analog signal and then supply the analog signal to each pixel (or sub-pixel (SP)).

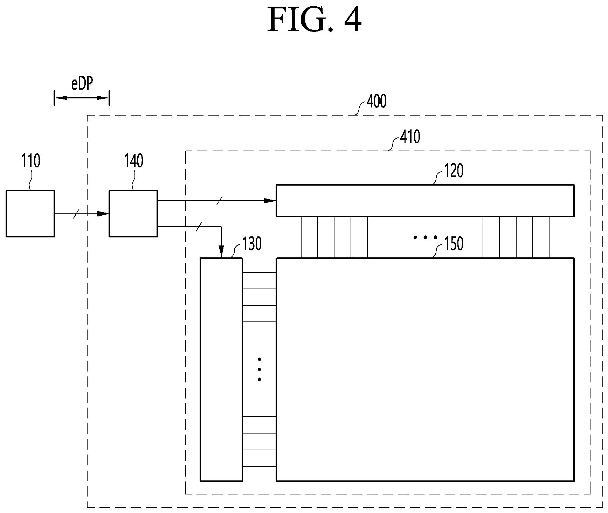

FIG. 4 is a block diagram of a display device according to an embodiment.

Referring to FIG. 4, the display device according to an embodiment may include a source unit (e.g., the image processing device 110) and a sink unit 400. The source unit (e.g., the image processing device 110) indicates a system and may include an eDP transmitting part (e.g., the eDP transmitting part 310 of FIG. 3). The sink unit 400 indicates a panel unit and may include a data processing device 140 (e.g., a timing controller) and a display unit 410. As described above, the data processing device 140 may include an eDP receiving part (e.g., the eDP receiving part 321 of FIG. 3). Such a source unit (e.g., the image processing device 110) and the sink unit 400 may mutually communicate through an eDP interface (e.g., the eDP interface 330 of FIG. 3).

The source unit (e.g., the image processing device 110) may transmit image data to the data processing device 140 included in the sink unit 400 through the eDP transmitting part. The data processing device 140 may receive image data through the eDP receiving part and apply the image data to the display unit 410. In addition, the data processing device 140 may generate timing control signals for controlling an operation timing of driving circuits (e.g., a data driving device 120 and a gate driving device 130 included in the display unit 410. An interface for data transmission between the data processing device 140 and the data driving device 120 may be implemented as a mini LVDS interface, but the embodiment is not limited thereto. According to an embodiment, the display unit 410 may include the display panel 150, the data driving device 120, and the gate driving device 130. Since detailed configurations of the display unit 410 have been described in FIG. 1, detailed descriptions thereof will be omitted.

FIG. 5 is a diagram illustrating a structure of frame data according to an embodiment.

Referring to FIG. 5, one frame 500 may include a vertical blank period (VBlank Period), a horizontal blank period (HBlank Period), and image data 550 (e.g., active video image data). Horizontal lines without the image data 550 may constitute a vertical blank period and the vertical blank period may be transmitted in the order of blank start data (BS) 510, a vertical blank ID (VB-ID) 520, a video M value, and an audio M value (Mvid/Maud) 530. Horizontal lines with the image data 550 may transmit the image data 550 after the horizontal blank period. The horizontal blank period may be transmitted in the order of the BS 510, the VB-ID 520, the Mvid/Maud 530, and blank end (BE) data 540. Referring to FIG. 3 together, according to an embodiment, the eDP transmitting part 310 of the first device 210 may sequentially transmit data corresponding to each horizontal line of the frame 500 to the eDP receiving part 321 of the second device 220 through the main link 331 of the eDP interface 330.

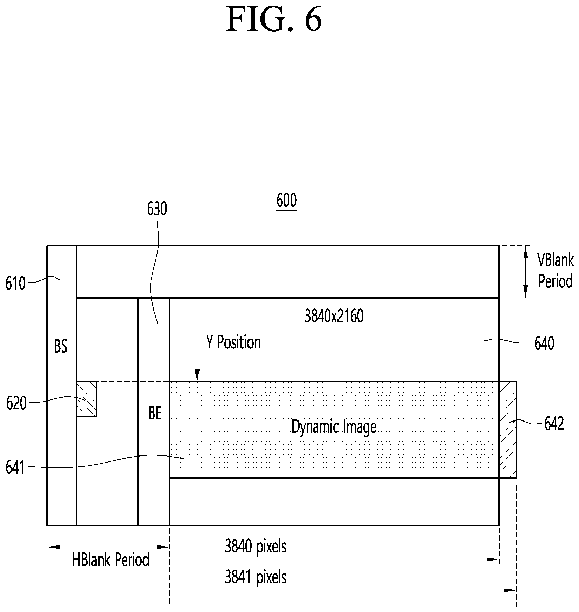

FIG. 6 is a diagram illustrating a structure of frame data according to an embodiment.

Referring to FIG. 6, according to one embodiment, one frame 600 may include a vertical blank period (VBlank Period), a horizontal blank period (HBlank Period), and image data 640 (e.g., active video image data). In FIG. 6, the image data 640 is illustrated as having 3840 pixels in width and 2160 pixels in height, but is not limited thereto.

Horizontal lines without image data 640 may constitute a vertical blank section, and the vertical blank section may start from blank start data (BS) 610. For horizontal lines where image data 640 exists, the image data 640 may be transmitted after the horizontal blank section. The horizontal blank section may start from BS 610 and end at blank end data (BE) 630. Image data 640 may be transmitted after the BE 630. Referring to FIG. 3 together, according to one embodiment, the eDP transmitting part 310 of the first device 210 may sequentially transmit the data corresponding to each horizontal line of the frame 600 to the eDP receiving part 321 of the second device 220 through the main link 331 of the eDP interface 330.

According to one embodiment, at least one partial area 641 may be set within the image data 640. For example, when the image data 640 is an image displayed on a vehicle display, the partial area 641 may be an area corresponding to an image containing important information about the vehicle. According to one embodiment, the image containing important information about the vehicle may include a map, gear status, turn signal status, vehicle status, and values obtained from various sensors of the vehicle. According to one embodiment, the partial area 641 may include a dynamically moving image. For example, the position of the partial area 641 (e.g., the position of a vertical line) within the area of the image data 640 may be change as the frame is changed. According to one embodiment, the data of the frame 600 may include first location information 620 corresponding to the partial area 641. The first location information 620 corresponding to the partial area may include vertical position information (e.g., "Y Position") for the partial area 641 within the area of the image data 640. According to one embodiment, the first location information 620 corresponding to the partial area 641 may be transmitted within the horizontal blank section as shown in FIG. 6. For example, the first location information 620 may be transmitted on the same horizontal line as the horizontal line where the partial area 641 starts.

According to one embodiment, the data of the frame 600 may include cyclic redundancy check (CRC) data 642. The CRC data 642 may be data generated based on the partial area 641 to verify error in the partial area 641. According to one embodiment, the CRC data 642 may be arranged on the same horizontal line as the partial area 641 within the image data 640. For example, when transmitting the image data 640, the CRC data 642 may be transmitted after data corresponding to the partial area 641 is transmitted on the same horizontal line.

According to one embodiment, when the image data 640 is used for a vehicle display installed in a vehicle, the partial area 641 is divided into a map, gear status, turn signal status, vehicle status, and values obtained from various sensors of the vehicle. For example, the partial area 641 may include images corresponding to the front/back/side vehicle location, pedestrian location, and obstacle location.

According to one embodiment, the CRC data 642 may include data generated by performing a CRC operation on the partial area 641. According to another embodiment, the CRC data 642 may include data generated by performing a CRC calculation only for a specific section in which the image data of the partial area 641 is divided into a plurality of sections. According to another embodiment, the CRC data 642 may include data generated by performing a CRC operation only on subpixels of a specific color (e.g., R, G, or B) in the image data of the partial area 641.

According to one embodiment, the CRC data 642 forms a part of the frame 600, so it may be transmitted together when data of the frame 600 is transmitted. For example, the CRC data 642 may be transmitted through the main link 331 of the eDP interface 330 along with the image data 640 when transmitting data of the frame 600.

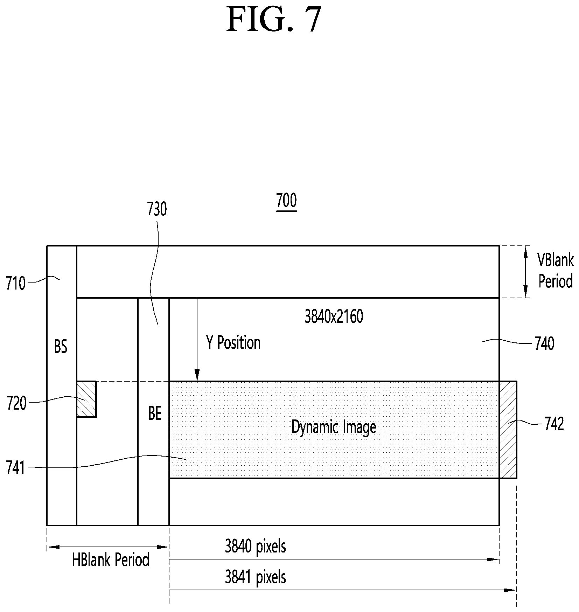

FIG. 7 is a diagram illustrating the structure of frame data according to one embodiment.

Referring to FIG. 7, according to one embodiment, one frame 700 may include a vertical blank period (VBlank Period), a horizontal blank period (HBlank Period), and image data 740 (e.g., active video image data). In FIG. 7, the image data 740 is illustrated as having 3840 pixels in width and 2160 pixels in height, but is not limited thereto.

Horizontal lines without image data 740 may constitute a vertical blank section, and the vertical blank section may start from blank start data (BS) 710. For horizontal lines where image data 740 exists, the image data 740 may be transmitted after the horizontal blank section. The horizontal blank section may start from BS 710 and end at blank end data (BE) 730. Image data 740 may be transmitted after the BE 730. Referring to FIG. 3 together, according to one embodiment, the eDP transmitting part 310 of the first device 210 sequentially transmit the data corresponding to each horizontal line of the frame 700 to the eDP receiving part 321 of the second device 220 through the main link 331 of the eDP interface 330.

According to one embodiment, at least one partial area 741 may be set within the image data 740. For example, when the image data 740 is an image displayed on a vehicle display, the partial area 741 may be an area corresponding to an image containing important information about the vehicle. The position of the partial area 741 (for example, the position of a vertical line) within the area of the image data 740 may be changed as the frame is changed. According to one embodiment, the above-mentioned FIG. 6 may be data of the Nth frame, and FIG. 7 may be data of the N+1th frame.

According to one embodiment, the data of the frame 700 may include second location information 720 corresponding to the partial area 741. The second location information 720 corresponding to the partial area may include vertical position information (e.g., "Y Position") for the partial area 741 within the area of the image data 740. According to one embodiment, the second location information 720 corresponding to the partial area may be transmitted within the horizontal blank section as shown in FIG. 7. For example, the second location information 720 may be transmitted on the same horizontal line as the horizontal line where the partial area 741 starts.

According to one embodiment, the data of the frame 700 may include cyclic redundancy check (CRC) data 742. The CRC data 742 may be data generated based on the partial area 741 to verify error in the partial area 741. According to one embodiment, the CRC data 742 may be arranged on the same horizontal line as the partial area 741 within the image data 740. For example, when transmitting the image data 740, the CRC data 742 may be transmitted after data corresponding to the partial area 741 is transmitted on the same horizontal line.

According to one embodiment, referring to FIGS. 6 and 7 together, the frame 600 of FIG. 6 may be transmitted in the Nth frame, and the frame 700 of FIG. 7 may be transmitted in the N+1th frame. At this time, the position of the partial area 641 in FIG. 6 may be moved to the position of the partial area 741 in FIG. 7. Accordingly, the first location information 620 included in the frame 600 of FIG. 6 may be changed to the second location information 720 included in the frame 700 of FIG. 7. For example, since the position of the partial area 741 in FIG. 7 is lowered in the vertical direction compared to the partial area 641 in FIG. 6, the value of the location information may be increased from the first location information 620 to the second location information 720.

According to one embodiment, the CRC data 742 forms a part of the frame 700, so it may be transmitted together when data of the frame 700 is transmitted. For example, the CRC data 742 may be transmitted through the main link 331 of the eDP interface 330 along with the image data 740 when transmitting data of the frame 700.

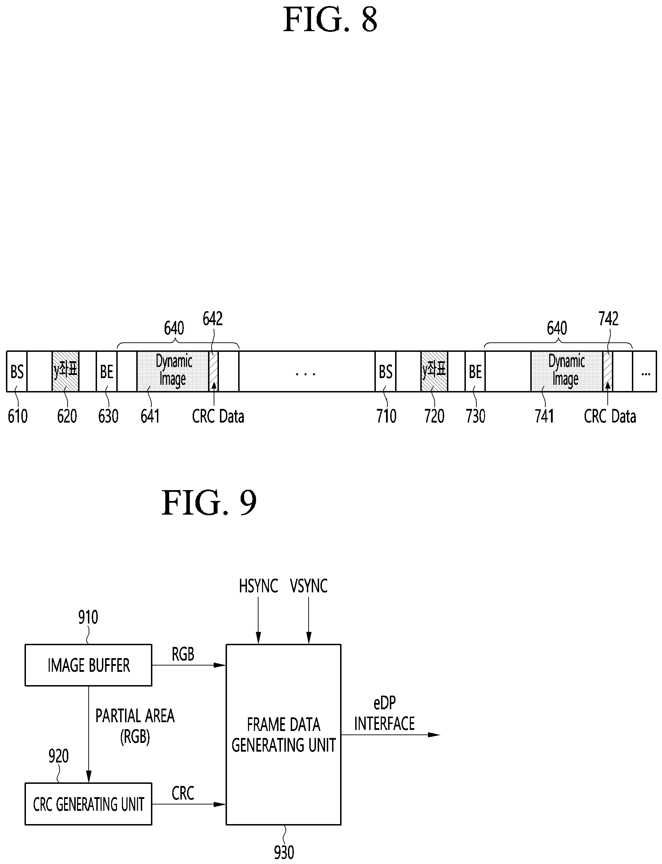

FIG. 8 is a diagram illustrating the configuration of transmission data according to an embodiment.

Referring to FIG. 8, according to one embodiment, data of the N-th frame 600 of FIG. 6 and data of the N+1-th frame 700 of FIG. 7 may be sequentially transmitted. For example, data of the Nth frame 600 may be transmitted in the following order: BS 610, first location information 620 (e.g., Y coordinate), BE 630, and image data 640. The image data 640 may include a partial area 641 and CRC data 642. Additionally, data of the N+1th frame 700 may be transmitted in the following order: BS 710, second location information 720 (e.g., Y coordinate), BE 730, and image data 740. The image data 740 may include a partial area 741 and CRC data 742.

According to one embodiment, as described above, the location of the partial area 641 in FIG. 6 may be moved to the location of the partial area 741 in FIG. 7. Accordingly, the first location information 620 included in the frame 600 of FIG. 6 may be changed to the second location information 720 included in the frame 700 of FIG. 7.

FIG. 9 is a circuit diagram of a data transmission device according to an embodiment.

Referring to FIG. 9, a data transmission device (e.g., display processing device) according to an embodiment may include an image buffer 910, a CRC generating unit 920, and a frame data generating unit 930. The image buffer 910 may store image data (e.g., image data 640, 740 in FIGS. 6 and 7).

According to one embodiment, the CRC generating unit 920 may generate CRC data (e.g., CRC data 642, 742 of FIGS. 6 and 7) on the partial area (e.g., partial area 641, 741 in FIGS. 6 and 7) among the image data stored in the image buffer 910. The CRC data may be generated through redundancy and polynomial calculation, and various known CRC calculation methods may be applied. For example, the CRC calculation method may be performed through an XOR operation with the original data using the number of CRC generation bits (n) and Divisor (n+1) obtained through a set polynomial.

According to one embodiment, the frame data generating unit 930 may generate frame data by adding CRC data generated by the CRC generating unit 920 to the image data stored in the image buffer 910. For example, the frame data generating unit 930 may generate frame data corresponding to the frame 600, 700 as shown in FIGS. 6 and 7 based on the horizontal synchronization signal (HSYNC) and the vertical synchronization signal (VSYNC). Frame data generated by the frame data generating unit 930 may be transmitted through an eDP interface (e.g., main link transmission line). According to one embodiment, the frame data constitutes CRC data 642, 742 on the same horizontal line as the image data 640, 740, as described above in FIGS. 6 and 7, so that CRC data 642, 742 and the image data 640, 740 can be transmitted together in the transmission section of the same horizontal line.

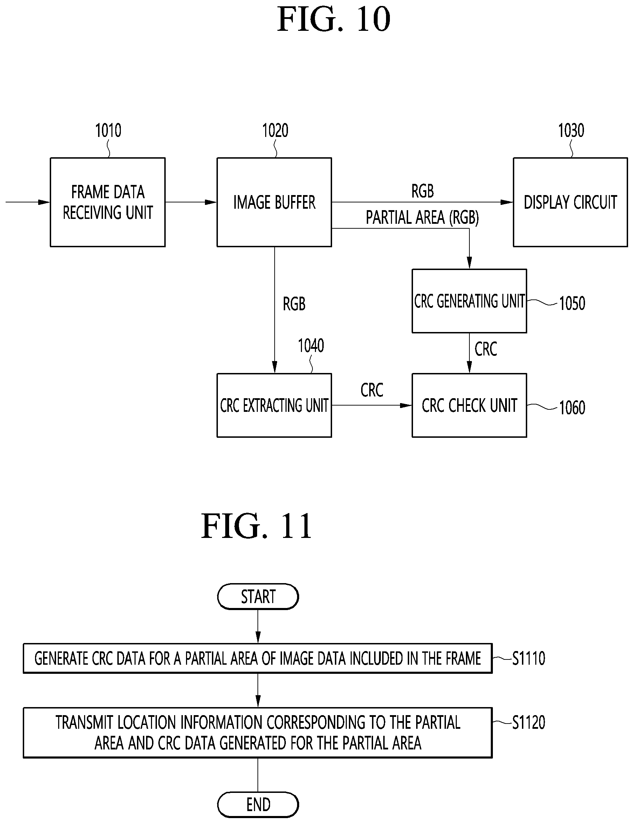

FIG. 10 is a circuit diagram of a data reception device according to an embodiment.

Referring to FIG. 10, a data receiving device (e.g., a display driving device) according to an embodiment may include a frame data receiving unit 1010, an image buffer 1020, a display circuit 1030, a CRC extracting unit 1040, and a CRC generating unit 1050 and a CRC check unit 1060.

According to one embodiment, the frame data receiving unit 1010 may receive frame data transmitted through the eDP interface in FIG. 9. The image buffer 1020 may extract image data 640, 740 and CRC data 642, 742 from frame data constituting the frame 600, 700 to store. For example, since the CRC data 642, 742 is transmitted on the same horizontal line as the horizontal line on which the partial area 641, 741 of the image data 640, 740 is transmitted, it may be stored in the buffer 1020 along with the image data 640, 740. Image data 640, 740 stored in the image buffer 1020 may be transmitted to the display circuit 1030. The display circuit 1030 may convert image data 640, 740 of digital type into analog signal and provide the converted signal to each pixel (e.g., sub-pixel).

According to one embodiment, the CRC extracting unit 1040 may extract CRC data 642, 742 from the data stored in the image buffer 1020. For example, the CRC extracting unit 1040 may check the location information 620, 720 of the partial areas 641, 741 included in the horizontal blank section among the data of the frames 600, 700 and extract CRC data 642, 742 based on the checked location information 620, 720. For example, data included after the last pixel of the partial area 641, 741 on the same horizontal line as the image data 640, 740 stored in the image buffer 1020 may be checked as CRC data 642, 742.

According to one embodiment, the CRC generating unit 1050 may check partial area 641, 741 among the image data 640, 740 stored in the image buffer 1020 based on the location information 620, 720 and generate CRC data from the data of the checked partial area 641, 741. The CRC check unit 1060 compares the CRC data corresponding to the partial area 641, 741 checked by the CRC extracting unit 1040 with the CRC data corresponding to the partial area generated by the CRC generating unit 1050 to determine whether there is an error or not in the partial area. According to one embodiment, as a result of the determination of the CRC check unit 1060, if an error is determined to have occurred in the partial area 641, 741, retransmission of the image data may be requested to the display processing device, or the user may be notified of the error. According to one embodiment, when the CRC check unit 1060 determines that an error has occurred in the partial area 641, 741, processing may be performed so that the partial area 641, 741 is not displayed.

FIG. 11 is a flowchart of a data transmission method according to one embodiment.

Referring to FIG. 11, according to one embodiment, the data processing device may generate CRC data for a partial area among the areas of image data included in the frame (S1110).

According to one embodiment, the data processing device may transmit location information corresponding to the partial area and CRC data generated for the partial area (S1120). At this time, the CRC data may be transmitted through the same transmission line as the image data. For example, the CRC data may be transmitted through the main link transmission line.

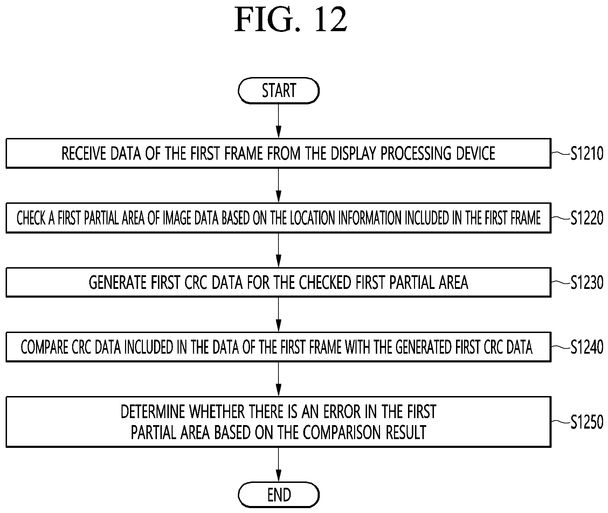

FIG. 12 is a circuit diagram of an image data inspection method according to an embodiment.

Referring to FIG. 12, according to one embodiment, the data driving device may receive data of the first frame from the display processing device (S1210).

According to one embodiment, the data driving device may check a first partial area among the areas of image data based on the location information included in the first frame (S1220).

According to one embodiment, the data driving device may generate first CRC data for the checked first partial area (S1230).

According to one embodiment, the data driving device may compare CRC data included in the data of the first frame with the generated first CRC data (S 1240). According to one embodiment, the data driving device may determine whether there is an error in the first partial area based on the comparison result (S1250).

According to various embodiment, as described above, according to this embodiment, error in data in an important area among information displayed on a display (e.g., a vehicle display) can be checked. Additionally, according to this embodiment, error in data in important areas can be checked without adding a separate interface for transmitting data. Additionally, according to this embodiment, error in image whose position is dynamically changed among information displayed on a display (e.g., a vehicle display) can be checked.

## Claims

1. A method for inspecting image data of a display driving device, comprising:
receiving data of a first frame transmitted from a display processing device;
checking a first partial area among the areas of image data included in the first frame, based on location information included in the data of the first frame;
generating a first cyclic redundancy check (CRC) data for the first partial area; and
checking CRC data included in the data of the received first frame; and
determining whether there is an error in the first partial area based on a comparison result between the CRC data included in the data of the first frame and the generated first CRC data.

2. The method of claim 1, wherein the location information corresponding to the first partial area includes vertical position information for the first partial area within the area of the image data.

3. The method of claim 1 or 2, wherein the CRC data is received in a transmission section of the image data.

4. The method of any of the preceding claims, wherein the first frame includes a vertical blank section, a horizontal blank section, and the image data.

5. The method of claim 4, wherein the location information is received in the horizontal blank section.

6. A display driving device, comprising:
a frame data receiving unit configured to receive data of a first frame transmitted from a display processing device;
a cyclic redundancy check (CRC) generation unit configured to check a first partial area among the areas of image data included in the first frame based on location information included in the data of the first frame and generate a first CRC data on the first partial area,
a CRC extracting unit configured to check CRC data included in the data of the first frame; and
a CRC check unit configured to determine whether there is an error in the first partial area based on a result of comparing the CRC data checked by the CRC extraction unit with the first CRC data generated by the CRC generation unit.

7. The device of claim 6, wherein the location information corresponding to the first partial area includes vertical position information for the first partial area within the area of the image data.

8. The device of claim 6 or 7, wherein the CRC data is received in a transmission section of the image data.

9. The device of any of claims 6 to 8, wherein the first frame includes a vertical blank section, a horizontal blank section, and the image data.

10. The device of claim 9, wherein the location information is received in the horizontal blank section.

11. The device of any of claims 6 to 10, wherein the CRC data is received on the same horizontal line as the first partial area.

12. The device of any of claims 6 to 10, wherein the CRC data is received through the same transmission line as the image data.

13. The device of claim 12, wherein the CRC data is received via a main link transmission line.

14. The device of any of claims 6 to 13, wherein a position of the first partial area is changed within an area of the image data according to a change of frame.

15. The device of any of claims 6 to 14, wherein the first partial area includes an image corresponding to a state of the vehicle.
